# EUROPEAN PATENT SPECIFICATION

(11) **EP 1 080 930 B1**
(45) Date of publication and mention of the grant of the patent: **23.11.2005**
(21) Application number: 00119061.0
(22) Date of filing: 01.09.2000
(51) Int. Cl.: B41J 29/393

(54) **Printer, method of controlling it and data storage medium**
Drucker, Steuerungsverfahren dafür und Datenspeichermedium
Imprimante, son procédé de commande et support de stockage de données

(30) Priority: 02.09.1999 JP 24924899
(43) Date of publication of application: 07.03.2001
(73) Proprietor: SEIKO EPSON CORPORATION, Shinjuku-ku, Tokyo 163-0811 (JP)
(72) Inventor: Minowa, Masahiro, Suwa-shi, Nagano-ken 392-8502 (JP)
(74) Representative: Hoffmann, Eckart

(56) References cited:
- EP-A- 0 873 873
- EP-A- 0 919 392
- US-A- 5 479 467

## Description

The invention relates to a printer, a method of controlling the printer, and a data storage medium carrying a program for implementing the method.

Printers are widely used for printing text and graphics on paper or other print media. Such printers are typically connected to an external data processing device such as a personal computer or other host computer that sends data for printing the text or graphic and data for controlling the printer. The printer can also send data indicative of the printer status or operating condition to the host computer.

Many of these printers use ink to print the text and graphics. An ink jet printer, for example, uses a replaceable ink cartridge, while dot impact printers and thermal transfer printers use a replaceable ink ribbon. POS (Point-of-Sale) systems generally employ printers that print on roll paper. Ink cartridges, ink ribbons, and roll paper are all printer consumables. For these consumables, statistics relating to consumption, e.g., the amount of ink supplied by the ink supply unit, are important for reducing printer cost, as an index for printer maintenance, operation, and management, and for new product development.

In some printers, the ink jet head, dot impact head, paper cutting device, and other - mainly mechanical - parts that are subject to wear, are arranged so that they can be easily replaced by the user. The print heads, particularly ink jet heads, are commonly treated as consumables, and information about how many times a print head is used can be quite important.

Printers used in a cash register or facsimile machine, for example, must be able to cut the printed paper in units of an appropriate length, e.g., in transaction unit or page unit lengths. Some printers are therefore designed so that the user can replace the cutter blade or a complete cutting device. It is desirable in such printers to gather statistics relating to, for example, the durability of the cutter blade or device.

In the prior art, quantitative information regarding the consumption of consumables or the usage or number of operations of replaceable parts such as the ink supply unit, cutter blade, and ink jet head, more specifically, information such as ink consumption, number of paper cutting operations, and number of ink ejections, is typically stored either in the form of a total value accumulated since the printer was first used or as a cumulative value representing the operation or use of a particular part or device until this part or device is replaced. Printers typically store this kind of operating history in an EEPROM (Electrically Erasable Programmable Read Only Memory), a flash ROM, hard disk, or other type of non-volatile memory.

US-A-4,586,147 discloses a laser printer in which operating history data in the form of the total number of printed pages, the number of printed pages by paper sizes etc. is stored for maintenance purposes.

JP-A-6-3956 teaches a laser printer in which a measure indicative of the amount of consumed toner is counted and stored as operating history data in a non-volatile memory. Whenever, based on this stored history data, the toner cartridge is replaced the history data is reset counting of that measure started again.

JP-A-4-305657 teaches a printer capable of redundantly storing operating history data in a plurality of memories, thereby avoiding the problem of such history data becoming lost as a result of a memory error or similar problem.

However, most prior art printers store only one of the above two types of information for each replaceable part. This has made it difficult to obtain information sufficient to provide detailed maintenance and management.

EP-A-0 919 392 discloses a printer that stores both as first history data the usage or operating count of individual printer parts until a respective part is replaced, and as second history data the total usage or operating count of those parts over the lifetime of the printer. This prior art also stores history data related to parts that are not replaceable by the user, including parts and assemblies for driving other parts. Specific printer operations, such as the number of characters printed, the distance of recording medium transportation, and the number of times the automatic paper cutting device is operated, can thus be individually accumulated, and the history data, that is, the cumulative count since the printer was first used, can also be stored in memory. Even if a part or component is replaced and the related first history data is reset, this prior art allows the second history data, i.e., the cumulative or total count to be kept stored. The stored values can be read, displayed or printed as operating history for user confirmation in response to a command from a host device to which the printer is connected or in response to an operator command.

None of the known printers provides information, however, about how much a replaced part or device has been operated or used before it was replaced, although such information is useful in order to gather statistics on the operating durability of those parts or devices.

Yet further, information about when these parts or devices are replaced and how long they were used is also valuable and can be used for the purposes noted above.

It is an object of the present invention to provide a printer and a method of controlling it that allow establishing statistics about the usage of individual replaceable parts such as the amount of ink used for printing, the number of times a cutting device is used, and the number of times the print head is driven for printing operations, by storing history data relating to a particular replaceable part even after that part has been replaced

This object is achieved with a printer as claimed in claim 1, a method as claimed in claim 12 and a storage medium as claimed in claim 20. Preferred embodiments of the invention are subject-matter of the dependent claims.

The invention provides a printer and a method of controlling it whereby quantitative information relating to the use (operation) or consumption of replaceable or consumable printer parts or devices is stored for both currently installed parts and devices as well as previously installed parts and devices that have been replaced already. The stored information is useful in maintenance control and further product development. Exemplary of this quantitative information is the amount of ink consumed for printing, the number of times a cutting device is operated for cutting paper or other print medium, and the number of times the print head is driven for printing.

By additionally storing information about the date at which a replaceable part or device was replaced, more detailed information can be accumulated about the replaceable or consumable parts or devices, thus enabling more precise printer maintenance management. For example, by integrating this functionality in a POS printer, the number of ink cartridges that were consumed in one month can be easily acquired and used for ink cartridge inventory control.

This information can also be effectively used for new product development, for example, by recovering the information from sites where the parts or devices are actually used.

Further objects and advantages of the present invention will be more readily understood by reference to the following description of preferred embodiments in conjunction with the accompanying drawings, in which:
- Fig. 1: is a block diagram of a printer according to a first embodiment of the invention;
- Fig. 2: is a flow chart of a control process for controlling the printer shown in Fig. 1;
- Fig. 3: shows exemplary states of usage counter areas reserved in a nonvolatile memory;
- Fig. 4: is a flow chart of a reporting process;
- Fig. 5: is a block diagram of a printer according to a second embodiment of the present invention;
- Fig. 6: shows an example of tables with maintenance management information;
- Fig. 7: is a schematic diagram of storage areas in the nonvolatile memory for storing the maintenance management information according to a third embodiment;
- Fig. 8: is a flow chart of a control process for controlling the printer according to the third embodiment; and
- Fig. 9: is a flow chart of a control process according to a fourth embodiment of the present invention.

### A. Printer

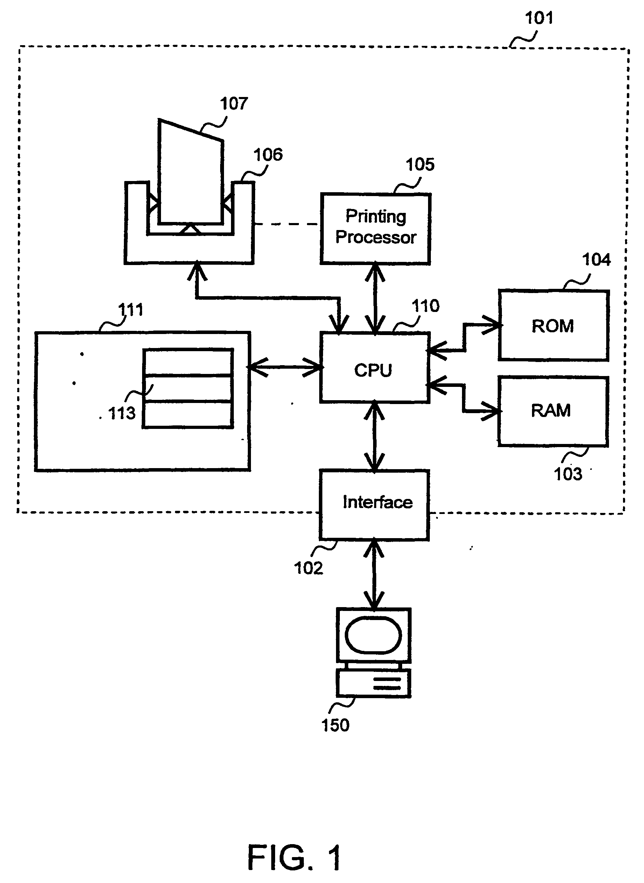

Fig. 1 is a block diagram of a printer according to a first embodiment of the invention.

Printer 101 exchanges data with host computer 150 by way of intervening interface 102. Application programs and a printer driver, which is a type of program for controlling a printer, are stored in and executed by the host computer. When a print command is received from an application program, the printer driver controls converting data to be sent to the printer to a format suitable for the printer, and sending of the converted data to the printer. The driver also receives and interprets various signals and data from the printer and provides necessary information to the user by way of the host computer.

CPU 110 controls operation of the various printer parts and devices in accordance with a control program stored in ROM 104. When the power is turned on, CPU 110 reads and runs the program from ROM 104. This control program can be updated as needed by updating the ROM 104.

When interface 102 receives data from host computer 150, the data are stored in a receive buffer implemented as part of RAM 103 in this embodiment. CPU 110 interprets the data stored in the receive buffer. If the data represent a print command, a print image is developed in a print buffer implemented as another part of RAM 103 in this embodiment. When the print buffer becomes full or at some other particular timing, CPU 110 drives a printing processor 105 containing a print head driver IC, a motor drive circuit, and various sensor circuits to drive the print head, a platen, and a paper feed mechanism so as to print the text and graphics.

After printing is completed, the paper is appropriately cut by cutter blade 107 held in blade holder 106. Cutter blade 107 is linked to a motor, plunger, or other appropriate drive source (not shown in the figures), which in turn is controlled by CPU 110 to cut the paper in units of an appropriate length. Typically this is a transaction unit producing one receipt, or an appropriately defined page length.

For ease of description, in the following description of this embodiment cutter blade 107 will be used as a representative of a variety of replaceable printer parts or consumables, including, inter alia, the ink supply (e.g., ink cartridge, ink ribbon, etc.), the print head (ink jet head or other type of print head), and roll paper. As will be appreciated by those skilled in the art, the invention can be applied to each of these and other replaceable printer parts and consumables in substantially the same way as will be described below with respect to the cutter blade. The term "usage" as used herein includes the operation of an operating part or device as well as the consumption of a consumable material.

The number of cutting operations is cumulatively stored in a specific usage counter area 113 of memory 111 each time the paper is cut. Memory 111 is preferably a flash EEPROM but can be any other type of nonvolatile storage device such as a hard disk. Even memory in the host computer 150 may be used as the nonvolatile memory.

According to the present invention, a plurality of usage counter areas 113 are provided in memory 111 to allow storing usage data for each of a corresponding plurality of cutter blades 107; the accumulated usage count of a particular cutter blade is kept as history usage data when that cutter blade is replaced by a new one, and a new usage counter area 113 in memory 111 is selected for the new cutter blade 107. Where a flash EEPROM is used for memory 111, considering the life of flash EEPROM devices, preferably a storage area is reserved in RAM 103 and used for implementing a temporary counter; the data from this temporary counter is added to that in the currently selected usage counter area after each certain multiple of cutting operations or at the end of each day, for example, in order to reduce the number of times the EEPROM is accessed.

While a cutter blade is used herein as an example of a replaceable printer part in this exemplary embodiment, the whole cutting device having both a moving blade and a fixed blade and possibly also including a drive source such as a motor could form the replaceable printer part instead.

As noted above, plural usage counter areas 113 in memory 111 each store the number of times a particular cutter blade 107 has been used. These usage counts can be sent via interface 102 to host computer 150 and used as maintenance information for printer 101.

To allow switching from one usage counter area to another one when a particular cutter blade 107 is replaced by a new one, requires means for detecting the replacement. While a variety of means is conceivable, one relies on the fact that, typically, cutter blade 107 is a piece of metal. It is therefore possible to provide two terminals on blade holder 106 such that the terminals are shorted when cutter blade 107 is installed, thus making it simple to detect when the cutter blade 107 has been replaced. When the whole cutting device is replaced, a switch can be provided on a holder for the cutting device such that the switch is operated when the cutting device is installed. It is further possible to detect replacement of the cutting device (or other replaceable part/device) by providing the cutting device with a ROM or other device carrying some kind of ID code, such as a serial number, that can either be read directly or by means of an appropriate sensor by the CPU. Replacement of the cutting device can then be detected by reading this ID code. In other words, replacement of a replaceable part or device can be detected by means of appropriate sensors detecting presence or absence or by a unique ID code on the part/device detectable by the printer.

The printer 101 can be alternatively designed so that the replaceable printer part(s) is (are) replaced in response to a command instructing the replacement from host computer 150, or after a corresponding input has been made at the control panel (not shown in the figures) of the printer 101. In this case replacement of the printer part can be detected by detecting the replacement command or the corresponding operation at the control panel.

### B. Printer control process

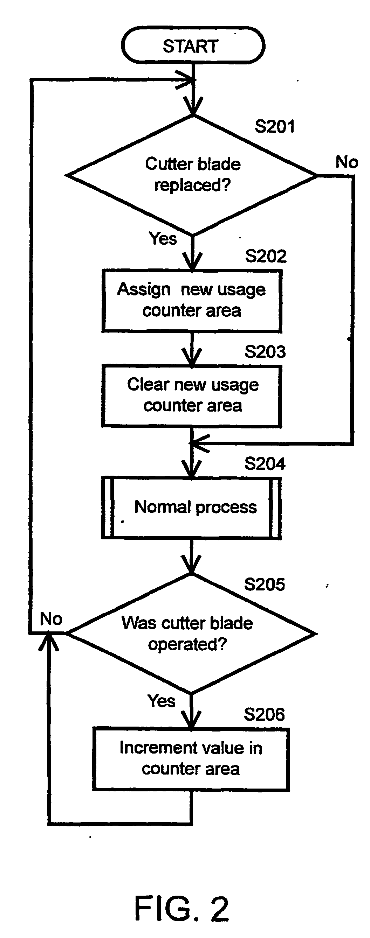

Fig. 2 is a flow chart showing a control process for controlling the printer shown in Fig. 1.

CPU 110 first detects whether cutter blade 107 has been replaced (S201).

If cutter blade 107 was replaced (S201 returns YES), CPU 110 assigns a new one of the usage counter areas 113 in memory 111, leaving the content in the usage counter area 113 used for the previous cutter blade as history usage data (S202), and initializes the new usage counter area 113 to zero (0) (S203). Control then advances to step S204.

If cutter blade 107 was not replaced (S201 returns NO), control skips to step S204 and the normal printer control process continues. In this normal printer control process, CPU 110 interprets data received from host computer 150 and stored in the receive buffer. If the data represent a print command, the CPU develops a print image in the print buffer, and drives printing processor 105 at an appropriate timing to print the text or graphics. CPU 110 also drives cutter blade 107 as necessary to cut the paper on which text or graphics have been printed. These processes are well known in the art, and further description thereof is thus omitted.

In this exemplary embodiment of the invention, part of RAM 103 is used for a temporary counter. The value stored at a particular address in RAM 103 is incremented each time the cutter blade 107 operates, and the corresponding usage counter area 113 is updated every 100 cutter blade operations.

More particularly, CPU 110 detects (S205) whether cutter blade 107 was operated in the normal process (S204). This can be easily detected by determining if the cutter drive motor was operated. If cutter blade 107 was not operated (S205 returns NO), the procedure loops back to S201. If the cutter blade 107 was operated (S205 returns YES) and the usage count in the temporary counter has reached 100, the value stored in the currently assigned usage counter area 113 is incremented by 1 to accumulate the number of cutter blade operations (S206), and the procedure loops back to S201. The temporary counter is then reset to zero.

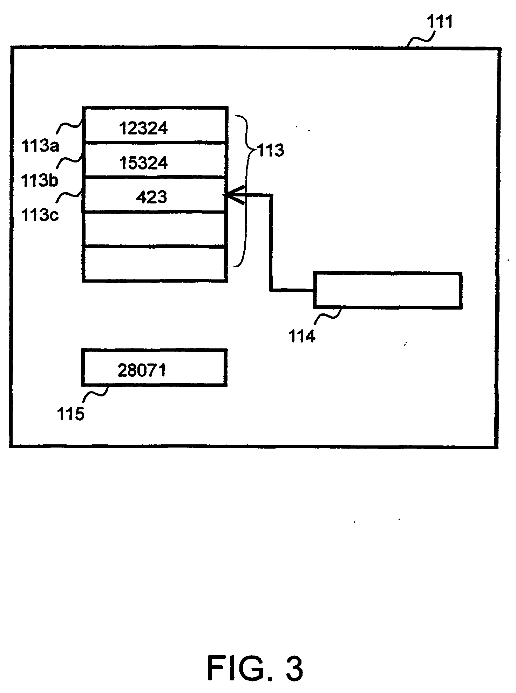

It is possible by repeating this process to store in memory 111 values (representing the number of times the cutter blade 107 was used, that is, the number of paper cuts, in this example) relating to the use of specific functions of a particular operating part (cutter blade 107 in this example) from the time that operating part was installed. Fig. 3 shows examples of values indicating usage or operation of a specific functional part and stored in usage counter areas 113 in memory 111 of the printer shown in Fig. 1.

In the example shown in Fig. 3 five usage counter areas 113a to 113e are reserved, and values are stored in the three areas 113a, 113b, and 113c. Hence, the currently used cutter blade 107 is the third blade since the printer 101 started being used.

By reading the values stored in usage counter areas 113, it is further known that the first cutter blade was replaced after 12,324 x 100 cuts; the second cutter blade was replaced after 15,324 x 100 cuts; and the current (third) cutter blade has so far made 423 x 100 cuts.

The address of the current usage counter area 113c is stored in address buffer 114 which is another storage area of memory 111 in this embodiment. Each time a new usage counter area 113 is assigned in step S202, the address stored in address buffer 114 is updated (incremented) by a certain value.

In the present embodiment, memory 111 also includes a total-usage counter area 115. The value of 28701 indicating the total number of cutter blade operations to present is stored in this total-usage counter area 115. As explained before, in this exemplary embodiment the number of actual operations is 100 times the stored value. Furthermore, the value stored in total-usage counter area 115 can be updated in step S206.

It should be noted that while five usage counter areas 113 are reserved to store values for five cutter blades in this embodiment, the particular number of usage counter areas is not critical to the invention. More specifically, the number and capacity of these usage counter areas is preferably determined in consideration of the expected service life of the printer. It is also possible to expand the available memory as desired or necessary.

As mentioned before, cutter blade 107 is to be understood as representative of a variety of operating parts for which the number of operations is desired to be counted; the ink supply unit can also be used as an operating part whose usage count is stored. In this case, the amount of ink consumed in the normal process (S204) can be accumulated in the usage counter area 113 by storing, for example, the number of black dots in the printed text or graphic. A similar value can be stored when the print head, and particularly an ink jet head, is used as the operating part.

More accurate ink consumption data can be obtained in printers that use an ink jet head by also accumulating the amount of ink ejected in head cleaning operations.

Furthermore, usage counts such as the number of times a certain part is used, the amount of a consumable that has been consumed, or the number of operations of a certain part, can be accumulated for plural parts or devices. This can be easily accomplished by detecting installation or replacement of each such part or device, and providing separate usage counter areas for each such part or device in memory 111. It would thus be possible, for example, to accumulate consumption data or operating amount data for two functional parts such as the ink supply unit and the cutter blade.

### C. Operating amount reporting process

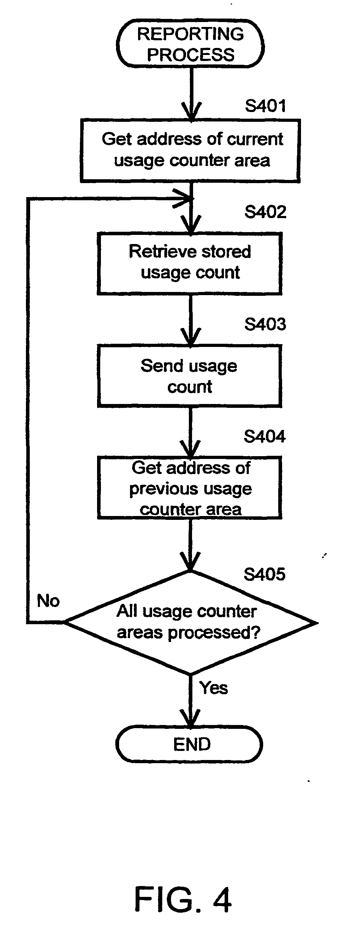

Host computer 150 can read the usage data for cutter blade 107 stored in the usage counter areas 113 of memory 111 so that this information can be used in conjunction with various maintenance tasks, and as a basis for improving cutter blade materials and for reducing cutter blade cost. Fig. 4 shows a reporting process for sending such usage data from printer 101 to host computer 150. More specifically, Fig. 4 is a flow chart of a reporting process for sending usage data (that is, the number of cuts made by cutter blade 107) for a particular operating part (cutter blade 107 in this example) to the host computer 150.

This reporting process starts when the host computer 150 sends a command instructing the printer to send usage data. An exemplary escape sequence for accomplishing this is shown below where [0x] indicates a hexadecimal value.
0x1b 0x68 [ESC h]

The reporting process starts when the CPU 110 detects that this command has been received.

When the reporting process starts, CPU 110 reads the address of the current usage counter area 113 from address buffer 114 (S401). The usage count stored in usage counter area 113 at the obtained address is then read (S402) and sent to host computer 150 (S403). The address is then decremented by a specific amount to obtain the address of the previous usage counter area 113 (S404). The address obtained in S404 is then compared with the address of the first usage counter area 113 to detect whether the usage data has been sent for all usage counter areas 113 (whether all usage counter areas 113 have been processed) (S405). If all data have been sent (S405 returns YES), the reporting process ends. If not (S405 returns NO), the procedure loops back to S402.

It should also be noted that while the values stored in usage counter areas 113 are sent to host computer 150 in the above example, they can also be printed on paper by driving the printing processor 105. Furthermore, the cumulative values stored in total-usage counter area 115 can also be sent to the host and/or printed on paper using an appropriate command. It is yet further possible to initiate the reporting process by entering a corresponding command at the control panel (not shown in the figures) of printer 101.

Maintenance personnel can thus obtain information required for maintenance by reviewing the usage count data sent to the host computer 150 or printed on paper.

Only the number of cuts made by cutter blade 107 is stored in the present embodiment, but if the printer 101 has a real-time clock the time or date at which the cutter blade 107 is replaced can also be stored to obtain even more detailed maintenance information.

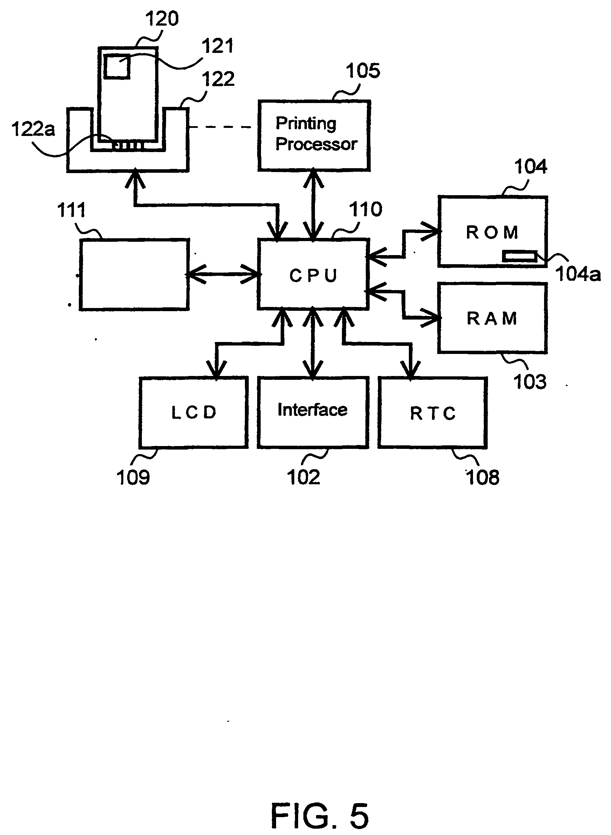

Fig. 5 is a block diagram of a printer according to a second embodiment of the invention. Like parts are identified by like reference numerals in Fig. 1 and Fig. 5, and further description thereof is omitted.

Printer 101' has a real-time clock 108 for obtaining time information. This real-time clock 108 outputs date and time information needed for maintenance management, and CPU 110 can obtain this time information as needed. An LCD panel 109 is provided on the control panel (not shown in the figures) as a device for visually presenting information to the user.

In this second embodiment, an ink jet head 120 with an ink cartridge (head-cartridge unit) will be described as a replaceable part. This ink jet head 120 has memory 121 for storing a unique head ID code such as a production number or ink management information for the ink cartridge, and is connected to the holder 106 by a connector 122a. Ink management information is information such as ink use term, the kind of ink (the object for quantity printing quality or for low printing quality). Although only one ink jet head is shown, the present embodiment is described as using two ink jet heads, namely a black-ink jet head and a color ink jet head. References to one of the ink jet heads in the following are to be understood to mean either head unless specified otherwise.

Even if the ink jet head 120 has been replaced while the printer 101' was turned off can be easily detected in the configuration shown in Fig. 5 by detecting the head ID code stored in memory 121 once the printer is turned on again.

Area 104a is a specific storage area in ROM 104 that is used as a usage limit memory for storing a value defining a certain limit value for the number of operating times that a replaceable part or device can be used. This value can thus indicate an amount such as a volume of ink, or a maximum usage count such as the maximum number of cutter operations. While these values are stored in ROM 104 in this embodiment, they can also be stored in nonvolatile memory 111.

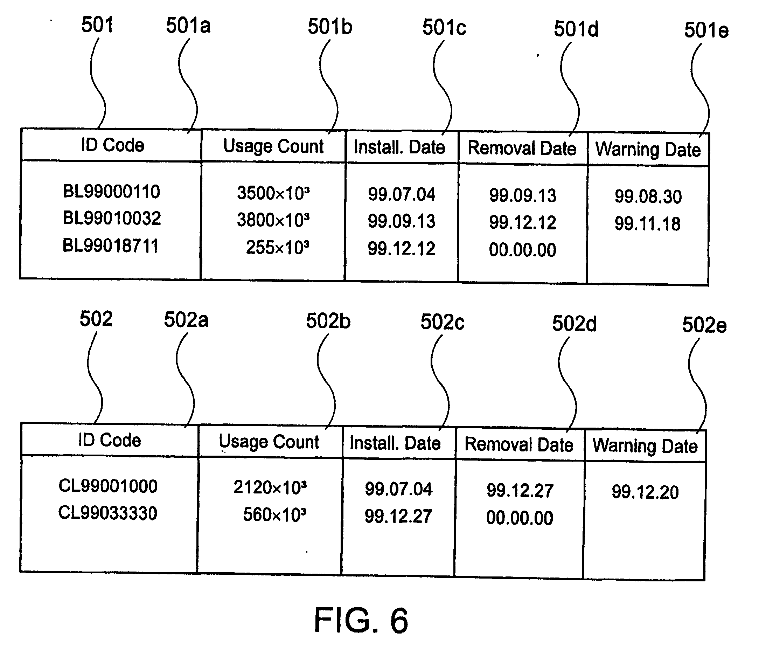

Fig. 6 is a table of data stored in memory 111 for maintenance management using the time data from the real-time clock.

Table 501 shows the use of the black-ink jet head, and table 502 shows use of the color ink jet head. Respectively shown in the tables are head ID codes in columns 501 a, 502a; ink discharge counts in columns 501b, 502b; installation dates in columns 501c, 502c; removal dates in columns 501 d, 502d; and warning dates in columns 501 e, 502e.

As shown in the tables, the first black-ink jet head was installed on July 4, 1999, used for 3.5 million discharges, and removed on September 13, 1999. The second black-ink jet head was installed the same day in 1999 and removed on December 12, 1999, and the third head is still in use.

The tables also show that the color head was installed on July 4, 1999 and removed December 27, 1999, and the second color head was installed the same day and is still in use. In other words, a date of 00.00.00 indicates installation or removal has not occurred.

The data shown in these tables are stored in memory 111 in the usage counter area and other related data areas for storing the dates of columns 501c to 501e and 502c to 502e, and can thus be read from memory as needed.

Additional functions such as described below are also provided in printer 101' according to this second embodiment of the invention.

In the columns 501e, 502e "Warning Date" the date is stored at which a warning that the respective ink cartridge has almost run out of ink was first issued. For example, if the standard ink volume of the ink cartridge is assumed to be equivalent to 4000 x 1000 discharges and a warning is to be issued when 80% (3200 x 1000) of the ink volume has been consumed, the corresponding limit value stored in area 104a of ROM 104 is 3200. When the value stored in the usage counter area approaches or exceeds this limit value, a warning is presented on the LCD panel 109 telling the user that the ink cartridge or the head-cartridge unit should be replaced. If the LCD panel 109 can display text, textual information can be presented. If the LCD panel 109 contains only LEDs or similar devices, the user can be notified by flashing a particular LED. An audible alarm can be further alternatively sounded. At the same time, the date of the warning is stored in the corresponding storage area in memory 111.

This warning date can be easily sent to the host computer in the above-described reporting process, and the user can confirm the date at which the warning was issued using a specific function provided in the printer driver. If the user forgets to replace the ink cartridge or head-cartridge unit, the warning date can be accessed using this printer driver function so that the warning can be reissued. Furthermore, if this information is stored in a printer accessible by plural host computers via a network, each of the computers can access and use the printer information.

It should be noted that the number of ink discharges is counted as the actual ink consumption value in the above example, but it is alternatively possible to count the actual volume of ink discharged for the print data instead of counting the ink discharges. In a page printer that uses a toner cartridge, toner consumption can be monitored by counting the number of pages that were printed.

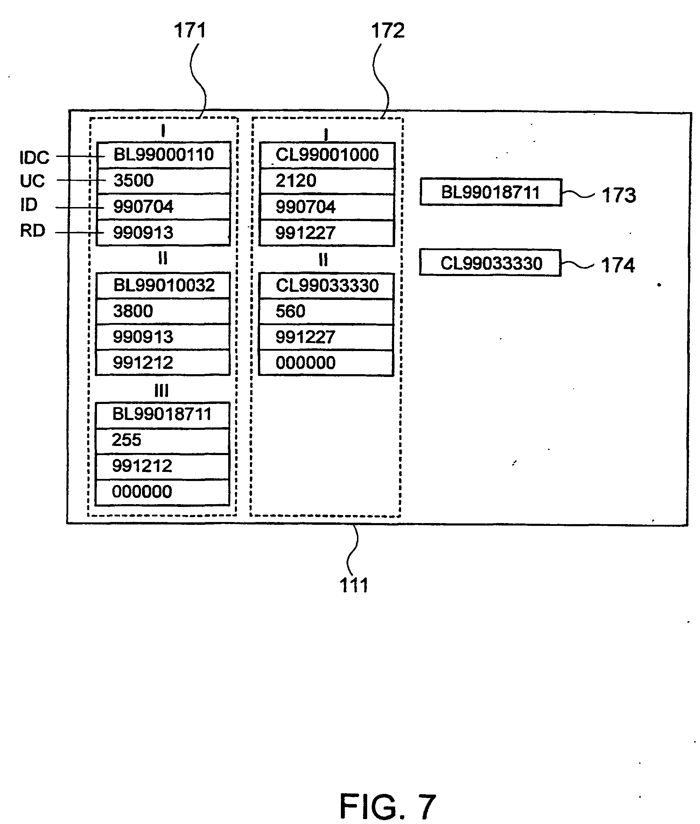

Fig. 7 is a schematic diagram showing similar data tables stored in memory 111 in accordance with a third embodiment. In Fig. 7, except for the warning dates the same data as in the tables of Fig. 6 are stored.

Data area 171 stores data for the black-ink jet head (the data in the upper one of the tables in Fig. 6); data area 172 stores data for the color ink jet head (the data in the lower one of the tables in Fig. 6); head ID area 173 stores the head ID code of the current black-ink jet head; and head ID area 174 stores the ID code for the current color ink jet head. An address management area (not shown in the figure) is also provided for storing address information for each of these areas 171 to 174. Data areas 171 and 172 are each subdivided into storage blocks, one block for each print head. Only blocks I to III for the first to third print head in data area 171 and blocks I and II for the first and second print head in block 172 are depicted in Fig. 7. As shown, each block is subdivided into four storage areas denoted IDC (ID code), UC (usage counter) ID (installation date) and RD (removal date).

It is thus possible to store usage data for each of the previously used ink jet heads as history usage data in memory 111.

Furthermore, if the memory 121 provided in the ink jet head is rewritable memory, the history usage data can also be written into the ink jet head memory. In this case the memory can be recovered when the ink jet head is recycled to gather information about ink jet head use. This information can then be used in further product development.

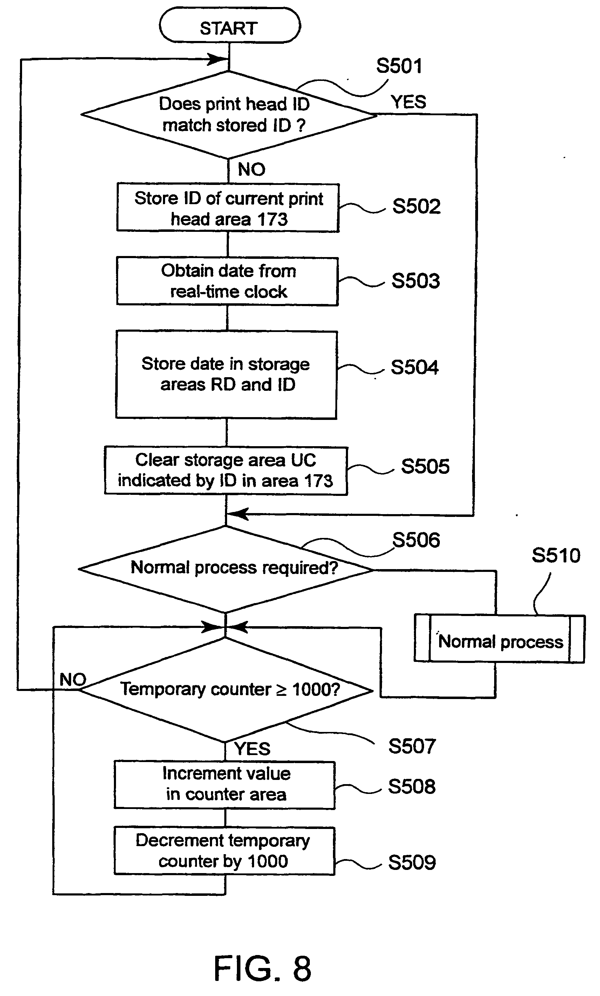

Fig. 8 is a flow chart showing an alternative control method for a printer according to the third embodiment using ink jet head 120 described above and having memory 111 organized in shown in Fig. 7.

Whether the head was replaced is first detected (S501). This step is normally run when the printer is turned on. In this case the head ID code, which in this example is a production number, is read from memory 121, and then compared with the head ID code stored in memory 111. If these head ID codes are the same, control skips to step S506 and the normal printing process (S510) commences.

If the head ID codes do not match, it is known that the head has been replaced. The new head ID code is therefore stored in area 173 (or 174 if the color head was replaced) in memory 111 as the updated head ID code (S502), and the current time data, including at least the date, is obtained from real-time clock 108 (S503). This date data is stored as the removal date for the head that was removed in storage area RD of the appropriate storage block of data area 171, and as the installation date for the newly installed head in storage area RD of the next storage block.

The storage area (UC in Fig. 7) used for the removed head as the usage counter area keeps the usage count accumulated when this head is removed as history usage data, a new usage counter area is assigned for the new head, and the new usage counter area is cleared (S505). This completes detecting head replacement and assigning a new usage counter area. As will be understood, in embodiments not only storing the usage count but also the ID code of a respective part or device and/or date/time data, assignment of a new "usage counter area" involves assignment of a storage area sufficient to store all desired data for the new part or device like it is shown for ink jet heads in Figs. 6 and 7.

Whether the printer should proceed with the normal printing process is then determined (S506), and data receiving, printing, and other normal printer processes are performed as required (S510). As described above, the temporary counter counts the number of ink discharge operations each time the head is driven.

When the normal process ends, the count value of the temporary counter is checked (S507). If it equals or exceeds 1000, the value in the usage counter area is incremented (S508) and the temporary counter is then decremented by 1000 (S509) and checked again. Steps S507 to S509 are repeated until the temporary counter is less than 1000, and the procedure then loops back to S501.

While for simplicity head ID codes are compared in the present embodiment to detect whether the head has been replaced, it is also possible to detect if the head has been removed by checking whether the ID number can be read.

Furthermore, a real-time clock is employed in this embodiment to obtain the time/date information, which can instead also be supplied by the host computer. In this case the time/date information is obtained by means of CPU 110 and interface 102 from the host computer.

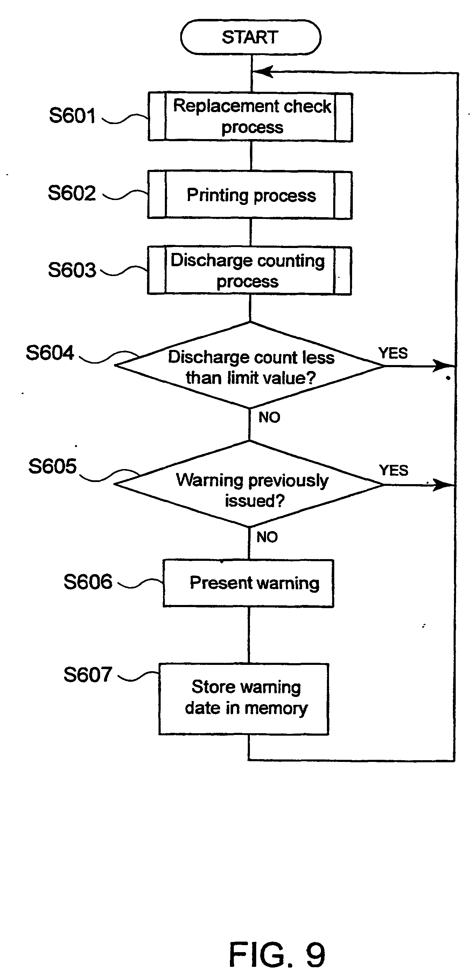

Fig. 9 is a flow chart of a printer control method according to a fourth embodiment of the invention. In this case the printer is an ink jet printer like that shown in Fig. 5.

After checking if the ink cartridge (or head-cartridge unit, whatever is installed in the printer) was replaced (S601), and performing the printing process (S602) and the ink discharge counting (S603), step S604 detects whether the number of ink discharges is below the limit value stored in area 104a of ROM 104. If it is (S604 returns YES), the procedure loops back to S601 and steps S601 to S604 are repeated. If step S604 returns NO, whether a warning has already been issued is detected (S605). This can be easily determined by detecting whether a date is stored in the corresponding storage area (corresponding to column 501e or 502e in Fig. 6). If a warning has not been issued, an appropriate warning is presented on LCD panel 109 and/or on the host computer's screen (S606), and the date is stored in the corresponding storage area of memory 111. Note that step S601 may comprise steps S501 to S505 of Fig. 8.

With certain dates, such as the installation date, removal date and warning date, stored in addition to the usage counts in the embodiments of Figures 5 to 9, a user can easily find out how much longer a certain removable part or a consumable can be used before replacement is required. Considering an ink cartridge, for instance, when the above described warning is issued (or at any other time) the user can cause the stored installation and removal dates of one or more previously used ink cartridges and the installation date of the currently used ink cartridge to be displayed. From the dates of the previous ink cartridges he can easily calculate the total (average) usage time of an ink cartridge. From the installation date and the actual date he can then decide at least roughly the time that remains before the ink in the currently used ink cartridge will be used up.

Where the printer uses a program-controlled CPU the control method of each of the above described embodiments can be implemented as a software program stored on a machine-readable data storage medium. In such case the CPU reads the program from the storage medium and implements the control method steps by executing the program. The data storage medium may be any of a Compact Disc, floppy disk, hard disk, magneto-optical disk, Digital Video Disc, magnetic tape, or semiconductor memory.

## Claims

1. A printer comprising:
a printing mechanism (105, 120), for printing text or graphics on a printing medium;
a replaceable element (107; 120) used in conjunction with an operation of the printing mechanism;
a detector (106, 110) for detecting replacement of the replaceable element;
a nonvolatile memory (111);
a counter (103, 110, 111) for counting a count value representing the usage of the replaceable element; and
a controller (110) for cumulatively storing the count value in said nonvolatile memory;
wherein the nonvolatile memory has a plurality of storage areas (113);
**characterized in that**
one of said plural storage areas is assigned at a time for storing said accumulated count value; and
said controller (110) is adapted to respond to said detector detecting that the replaceable element is replaced, by keeping the accumulated count value in the currently assigned storage area as history usage data related to the replaced element, and assigning another one of the storage areas for cumulatively storing the count value related to the new element.

2. The printer of claim 1, wherein the replaceable element is a cutting device (107) for cutting the printing medium, and said counter (103, 110, 111) counts number of cuts performed by the cutting device.

3. The printer of claim 1, wherein the replaceable element is an ink cartridge for supplying ink the printing mechanism, and said counter counts the amount of ink actually supplied.

4. The printer of claim 1, wherein the replaceable element is an ink jet head/ink cartridge unit; and
said counter counts a head drive count based on which the consumption of ink is calculated.

5. The printer of claim 1, wherein the replaceable element is a consumable of the printer.

6. The printer of any of claims 1 to 5, further comprising a control panel wherein said controller is responsive to a predetermined command input at the control panel to cause the printing mechanism to print information relating to accumulated count values stored in one or more of said plurality of storage areas.

7. The printer of any of claims 1 to 6, further comprising a terminal (102) for connection to an external device, said controller (110) being responsive to a predetermined command received through said terminal to cause the printing mechanism (105, 120) to print information relating to accumulated count values stored in one or more of said plurality of storage areas (113).

8. The printer of claim 7, wherein said terminal (102) is for connection to a host computer (150), the controller being responsive to a predetermined command received through said terminal to send information relating to the accumulated count value stored in one or more of said plurality of storage areas (113) to said host computer.

9. The printer of any one of the preceding claims, wherein said controller (110) is adapted to store in said nonvolatile memory (111) for each of said history usage data time information including at least the date at which the respective replaceable element (107; 120) was replaced.

10. The printer of claim 9, further comprising a terminal (102) for connection to a host computer (150), said controller being adapted to obtain said time information through said terminal from said host computer.

11. The printer of any one of the preceding claims, further comprising:
a comparator (110) for comparing the accumulated count value in the currently assigned storage area (113) with a predetermined limit value; and
a signaling device for outputting a signal when the accumulated count value is equal or near to the limit value;
said controller (110) being further adapted to store in said nonvolatile memory (111) and in relation to the currently used storage area time information, including at least the date at which the signaling device outputs said signal.

12. A method of controlling a printer as defined in claim 1, comprising the steps of:
(a) detecting whether a replaceable element (107; 120) has been newly mounted;
(b) assigning a new storage area (113) of the nonvolatile memory (111) when step (a) detects a replaceable element has been newly mounted while keeping the contents of the previously assigned storage area unchanged;
(c) counting an amount relating to the operation of the currently installed replaceable element;
(d) cumulatively storing the count value counted in step (b) in the storage area last assigned in step (b);
(e) detecting a predetermined command being entered into the printer;
(f) outputting, in response to a detection in step (e), information indicative of the accumulated count value in one or more storage areas; and
(g) repeating steps (a) to (f).

13. The method of claim 12 for controlling a printer as defined in claim 2, wherein step (c) comprises counting the number cuts performed by the cutting device (107) of the printer.

14. The method of claim 12 for controlling a printer as defined in claim 3, wherein step (c) comprises counting the amount of ink actually supplied.

15. The method of claim 12 for controlling a printer as defined in claim 4, wherein step (c) comprises counting the ink jet heads drive and calculating the amount of consumed ink from the count value.

16. The method of claim 12, wherein step (e) comprises detecting reception of a predetermined command from a host computer (150); and step (f) comprises outputting said information to the host computer.

17. The method of claim 12, wherein step (e) comprises detecting reception of a predetermined command from a host computer (150); and step (f) comprises causing said printing mechanism (105, 120) to print said information.

18. The method of any of claims 12 to 17, wherein step (b) includes storing, when step (a) detects a replaceable element (107; 120) has been newly mounted, in the nonvolatile memory the date of the detection as removal date of the replaced element.

19. The method of any one of claims 12 to 18 for controlling a printer as defined in claim 11, further comprising:
(h) comparing the accumulated count value stored in the storage area (113) last assigned in step (b) with a predetermined limit value;
(i) outputting an alarm signal when the stored value is equal to or near the limit value; and
(k) storing time information, including at least the date at which the alarm signal is output.

20. A data storage medium carrying a computer program which when executed in a printer as defined in any one of claim 1 to 11 performs the method of any one of claims 12 to 19.

## Patentansprüche

1. Drucker aufweisend:
einen Druckmechanismus (105, 120) zum Drucken von Text oder Grafik auf ein Druckmedium;
ein austauschbares Element (107; 120), das zusammen mit einer Operation des Druckmechanismus verwendet wird;
einen Detektor (106, 110) zur Detektion des Austauschs des austauschbaren Elements;
einen nicht flüchtigen Speicher (111);
einen Zähler (103, 110, 111) zum Zählen eines Zählwertes, der den Gebrauch des austauschbaren Elements repräsentiert; und
eine Steuerung (110) zur kumulativen Speicherung des Zählwertes im nicht flüchtigen Speicher;
wobei der nicht flüchtige Speicher eine Mehrzahl Speicherbereiche (113) hat;
**dadurch gekennzeichnet, dass**
jeweils ein Speicherbereich der Mehrzahl Speicherbereiche zum Speichern des akkumulierten Zählwertes zugewiesen ist; und
die Steuerung (110) so ausgeführt ist, dass sie auf den Detektor, der detektiert, dass das austauschbare Element ausgewechselt worden ist, reagiert, indem der akkumulierte Zählwert im aktuell zugewiesenen Speicherbereich als Verlaufgebrauchsdaten bezüglich des ausgewechselten Elements gehalten und ein anderer Speicherbereich zugewiesen wird, um den Zählwert bezüglich des neuen Elements kumulativ zu speichern.

2. Drucker nach Anspruch 1, bei dem das austauschbare Element eine Schneidvorrichtung (107) zum Schneiden des Druckmediums ist, und der Zähler (103, 110, 111) die Anzahl der von der Schneidvorrichtung ausgeführten Schneidvorgänge zählt.

3. Drucker nach Anspruch 1, bei dem das austauschbare Element eine Tintenpatrone zum Zuführen von Tinte zum Druckmechanismus ist, und der Zähler die Tintenmenge zählt, die tatsächlich zugeführt wird.

4. Drucker nach Anspruch 1, bei dem das austauschbare Element eine Tintenstrahlkopf/Tintenpatroneneinheit ist; und
bei dem der Zähler die Anzahl der Ansteuerungen des Kopfes zählt, auf deren Basis der Tintenverbrauch berechnet wird.

5. Drucker nach Anspruch 1, bei dem das austauschbare Element ein Verbrauchsmaterial des Druckers ist.

6. Drucker nach einem der Ansprüche 1 bis 5, ferner ein Bedienfeld aufweisend, wobei die Steuerung auf einen am Bedienfeld eingegebenen vorgegebenen Befehl reagiert, um den Druckmechanismus zu veranlassen, Informationen bezüglich der akkumulierten Zählwerte zu drucken, die in einem oder mehreren der Speicherbereiche der Mehrzahl Speicherbereiche gespeichert sind.

7. Drucker nach einem der Ansprüche 1 bis 6, ferner einen Anschluss (102) zur Verbindung mit einem externen Gerät aufweisend, wobei die Steuerung (110) auf einen über den Anschluss empfangenen vorgegebenen Befehl reagiert, um den Druckmechanismus (105, 120) zu veranlassen, Informationen bezüglich der akkumulierten Zählwerte zu drucken, die in einem oder mehreren der Speicherbereiche der Mehrzahl Speicherbereiche (113) gespeichert sind.

8. Drucker nach Anspruch 7, bei dem der Anschluss (102) zum Anschluss an einen Host-Computer (150) dient, wobei die Steuerung auf einen über den Anschluss empfangenen vorgegebenen Befehl reagiert, um Informationen bezüglich des akkumulierten Zählwertes, der in einem oder mehreren der Speicherbereiche der Mehrzahl Speicherbereiche (113) gespeichert ist, an den Host-Computer zu senden.

9. Drucker nach einem der vorigen Ansprüche, bei dem die Steuerung (110) so ausgeführt ist, dass sie im nicht flüchtigen Speicher (111) für alle Verbrauchsverlaufsdaten Zeitinformationen, einschließlich zumindest des Datums, zu dem das betreffende austauschbare Element (107; 120) ausgewechselt worden ist, speichert.

10. Drucker nach Anspruch 9, ferner einen Anschluss (102) zur Verbindung mit einem Host-Computer (150) aufweisend, wobei die Steuerung so ausgeführt ist, dass sie die Zeitinformationen über den Anschluss vom Host-Computer erhält.

11. Drucker nach einem der vorigen Ansprüche, ferner aufweisend:
einen Komparator (110) zum Vergleichen des akkumulierten Zählwertes im aktuell zugewiesenen Speicherbereich (113) mit einem vorgegebenen Grenzwert; und
eine Meldevorrichtung zum Ausgeben eines Signals, wenn der akkumulierte Zählwert gleich oder ungefähr gleich dem Grenzwert ist;
wobei die Steuerung (110) ferner so ausgeführt ist, dass sie im nicht flüchtigen Speicher (111) und bezüglich des aktuell verwendeten Speicherbereichs Zeitinformationen speichert, einschließlich zumindest des Datums, zu dem die Meldevorrichtung das Signal ausgibt.

12. Verfahren zum Steuern eines Druckers gemäß Anspruch 1, die Schritte aufweisend:
(a) Detektieren, ob ein austauschbares Element (107; 120) neu installiert worden ist;
(b) Zuweisen eines neuen Speicherbereichs (113) des nicht flüchtigen Speichers (111), wenn in Schritt (a) detektiert wird, dass ein austauschbares Element neu installiert worden ist, wobei der Inhalt des zuvor zugewiesenen Speicherbereichs unverändert gehalten wird;
(c) Zählen eines Betrags bezüglich der Operation des aktuell installierten austauschbaren Elements;
(d) kumulatives Speichern des in Schritt (c) gezählten Zählwertes im letzten in Schritt (b) zugewiesenen Speicherbereich;
(e) Detektieren eines in den Drucker eingegeben vorgegebenen Befehls;
(f) Ausgeben von Informationen als Reaktion auf eine Detektion in Schritt (e), die den akkumulierten Zählwert in einem oder mehreren Speicherbereichen angeben; und
(g) Wiederholen der Schritte (a) bis (f).

13. Verfahren nach Anspruch 12 zum Steuern eines Druckers gemäß Anspruch 2, bei dem Schritt (c) das Zählen der Anzahl Schneidvorgänge, die von der Schneidvorrichtung (107) ausgeführt worden sind, aufweist.

14. Verfahren nach Anspruch 12 zum Steuern eines Druckers gemäß Anspruch 3, bei dem Schritt (d) das Zählen der tatsächlich zugeführten Tintenmenge aufweist.

15. Verfahren nach Anspruch 12 zum Steuern eines Druckers gemäß Anspruch 4, bei dem Schritt (c) das Zählen der Ansteuerungsvorgänge des Tintenstrahlkopfes und das Berechnen der verbrauchten Tintenmenge aus dem Zählwert aufweist.

16. Verfahren nach Anspruch 12, bei dem Schritt (e) das Detektieren des Empfangs eines vorgegebenen Befehls vom Host-Computer (150) und Schritt (f) die Ausgabe der Information an den Host-Computer aufweist.

17. Verfahren nach Anspruch 12, bei dem Schritt (e) das Detektieren des Empfangs eines vorgegebenen Befehls vom Host-Computer (150) aufweist und Schritt (f) den Druckmechanismus (105, 120) veranlasst, die Information zu drucken.

18. Verfahren nach einem der Ansprüche 12 bis 17, bei dem Schritt (b) das Speichern des Detektionsdatums als Datum der Entfernung des ausgewechselten Elements im nicht flüchtigen Speicher enthält, wenn in Schritt (a) detektiert wird, dass ein austauschbares Element (107; 120) neu installiert worden ist.

19. Verfahren nach einem der Ansprüche 12 bis 18 zum Steuern eines Druckers gemäß Anspruch 11, ferner aufweisend:
(h) Vergleichen des akkumulierten Zählwertes, der in Schritt (b) im zuletzt zugewiesenen Speicherbereich (113) gespeichert worden ist, mit einem vorgegebenen Grenzwert;
(i) Ausgeben eines Warnsignals, wenn der gespeicherte Wert gleich oder ungefähr gleich dem Grenzwert ist; und
(k) Speichern von Zeitinformationen, die zumindest das Datum enthalten, zu dem das Warnsignal ausgegeben worden ist.

20. Datenspeichermedium, das ein Computerprogramm enthält, das bei Ausführung in einem Drucker nach einem der Ansprüche 1 bis 11 das Verfahren nach einem der Ansprüche 12 bis 19 ausführt.

## Revendications

1. Imprimante comprenant :
un mécanisme (105, 120) d'impression pour imprimer du texte ou des graphiques sur un support d'impression ;
un élément (107 ; 120) remplaçable utilisé en liaison avec un fonctionnement du mécanisme d'impression ;
un détecteur (106, 110) pour détecter le remplacement de l'élément remplaçable ;
une mémoire (111) non volatile ;
un compteur (103, 110, 111) pour compter une valeur de comptage représentant l'utilisation de l'élément remplaçable ; et
un dispositif (110) de commande pour stocker de manière cumulative la valeur de comptage dans la mémoire non volatile ;
dans laquelle la mémoire non volatile comprend une pluralité de zones (113) de stockage ;
**caractérisée en ce que**
l'une des zones de stockage de la pluralité de zones de stockage est attribuée à un moment pour stocker la valeur de comptage cumulée ; et
le dispositif (110) de commande est conçu pour répondre au fait que le détecteur détecte que l'élément remplaçable est remplacé, en conservant la valeur de comptage cumulée dans la zone de stockage actuellement attribuée en tant que donnée historique d'utilisation relative à l'élément remplacé, et en attribuant une autre des zones de stockage pour stocker de manière cumulative la valeur de comptage relative au nouvel élément.

2. Imprimante selon la revendication 1, dans laquelle l'élément remplaçable est un dispositif (107) de coupe destiné à couper le support d'impression, et le compteur (103, 110, 111) compte le nombre de coupes exécutées par le dispositif de coupe.

3. Imprimante selon la revendication 1, dans laquelle l'élément remplaçable est une cartouche d'encre destinée à fournir de l'encre au mécanisme d'impression, et le compteur compte la quantité d'encre réellement fournie.

4. Imprimante selon la revendication 1, dans laquelle l'élément remplaçable est une tête de jet d'encre/ une unité de cartouche d'encre ; et
le compteur compte un nombre d'entraînements de la tête sur la base duquel la consommation d'encre est calculée.

5. Imprimante selon la revendication 1, dans laquelle l'élément remplaçable est un consommable de l'imprimante.

6. Imprimante selon l'une quelconque des revendications 1 à 5, comprenant en outre un panneau de commande, le dispositif de commande étant sensible à une entrée d'instruction déterminée à l'avance sur le panneau de commande pour obliger le mécanisme d'impression à imprimer des informations relatives aux valeurs de comptage cumulées stockées dans une ou plusieurs des zones de stockage de la pluralité de zones de stockage.

7. Imprimante selon l'une quelconque des revendications 1 à 6, comprenant en outre une borne (102) destinée à être raccordée à un dispositif extérieur, le dispositif (110) de commande étant sensible à une instruction déterminée à l'avance reçue par l'intermédiaire de la borne pour faire en sorte que le mécanisme (105, 120) d'impression imprime des informations relatives aux valeurs de comptage cumulées stockées dans une ou plusieurs des zones de stockage de la pluralité de zones (113) de stockage.

8. Imprimante selon la revendication 7, dans laquelle la borne (102) est destinée à être raccordée à un ordinateur (150) hôte, le dispositif de commande étant sensible à une instruction déterminée à l'avance reçue par l'intermédiaire de la borne pour envoyer des informations relatives à la valeur de comptage cumulée stockée dans une ou plusieurs des zones de stockage de la pluralité de zones (113) de stockage à l'ordinateur hôte.

9. Imprimante selon l'une quelconque des revendications précédentes, dans laquelle le dispositif (110) de commande est conçu pour stocker dans la mémoire (111) non volatile chacune des informations temporelles de données historiques d'utilisation incluant au moins la date à laquelle l'élément (107 ; 120) remplaçable respectif a été remplacé.

10. Imprimante selon la revendication 9, comprenant en outre une borne (102) destinée à être raccordée à un ordinateur (150) hôte, le dispositif de commande étant conçu pour obtenir les informations temporelles de l'ordinateur hôte par l'intermédiaire de la borne.

11. Imprimante selon l'une quelconque des revendications précédentes, comprenant en outre :
un comparateur (110) pour comparer la valeur de comptage cumulée stockée dans la zone (113) de stockage actuellement attribuée avec une valeur limite déterminée à l'avance ; et
un dispositif de signalisation destiné à émettre un signal quand la valeur de comptage cumulée est égale ou proche de la valeur limite ;
le dispositif (110) de commande étant conçu en outre pour stocker dans la mémoire (111) non volatile et en fonction de la zone de stockage actuellement utilisée, des informations temporelles incluant au moins la date à laquelle le dispositif de signalisation émet le signal.

12. Procédé de commande d'une imprimante selon la revendication 1, comprenant les étapes consistant à :
(a) détecter si un élément (107 ; 120) remplaçable a été nouvellement monté ;
(b) attribuer une nouvelle zone (113) de stockage de la mémoire (111) non volatile quand l'étape (a) détecte qu'un élément remplaçable a été nouvellement monté tout en laissant inchangé le contenu de la zone de stockage précédemment attribuée ;
(c) compter une grandeur relative au fonctionnement de l'élément remplaçable actuellement installé ;
(d) stocker de manière cumulative la valeur de comptage comptée à l'étape (b) dans la zone de stockage attribuée en dernier à l'étape (b) ;
(e) détecter une instruction déterminée à l'avance entrée dans l'imprimante ;
(f) sortir, en réponse à une détection à l'étape (e), des informations représentatives de la valeur de comptage cumulée stockée dans une ou plusieurs des zones de stockage ; et
(g) répéter les étapes (a) à (f).

13. Procédé selon la revendication 12 destiné à commander une imprimante comme définie dans la revendication 2, dans lequel l'étape (c) comprend le comptage du nombre de coupes exécutées par le dispositif (107) de coupe de l'imprimante.

14. Procédé selon la revendication 12 destiné à commander une imprimante comme définie dans la revendication 3, dans lequel l'étape (c) comprend le comptage de la quantité d'encre réellement fournie.

15. Procédé selon la revendication 12 destiné à commander une imprimante comme définie dans la revendication 4, dans lequel l'étape (c) comprend le comptage des entraînements de la tête de jet d'encre et le calcul de la quantité d'encre consommée à partir de la valeur de comptage.

16. Procédé selon la revendication 12, dans lequel l'étape (e) comprend la détection de la réception d'une instruction déterminée à l'avance provenant d'un ordinateur (150) hôte ; et l'étape (f) comprend la sortie des informations sur l'ordinateur hôte.

17. Procédé selon la revendication 12, dans lequel l'étape (e) comprend la détection de la réception d'une instruction déterminée à l'avance provenant d'un ordinateur (150) hôte ; et l'étape (f) comprend l'étape consistant à faire en sorte que le mécanisme (105, 120) d'impression imprime les informations.

18. Procédé selon l'une quelconque des revendications 12 à 17, dans lequel l'étape (b) comprend le stockage, quand l'étape (a) détecte qu'un élément (107 ; 120) remplaçable a été nouvellement monté, dans la mémoire non volatile de la date de détection comme date d'enlèvement de l'élément remplaçable.

19. Procédé selon l'une quelconque des revendications 12 à 18 destiné à commander une imprimante comme définie dans la revendication 11, comprenant en outre :
(h) la comparaison de la valeur de comptage cumulée stockée dans la zone (113) de stockage attribuée en dernier à l'étape (b) avec une valeur limite déterminée à l'avance ;
(i) l'émission d'un signal d'alarme quand la valeur stockée est égale ou proche de la valeur limite ;
(k) le stockage d'informations temporelles, incluant au moins la date à laquelle le signal d'alarme est émis.

20. Support de stockage de données supportant un programme informatique qui, lorsqu'il est exécuté dans une imprimante telle celle définie dans l'une quelconque dès revendications 1 à 11, exécute le procédé selon l'une quelconque des revendications 12 à 19.
